# EUROPÄISCHE PATENTSCHRIFT

(11) **EP 1 927 980 B1**
(45) Veröffentlichungstag und Bekanntmachung des Hinweises auf die Patenterteilung: **16.04.2014**
(21) Anmeldenummer: 07120606.4
(22) Anmeldetag: 13.11.2007
(51) Int. Cl.: G10L 15/22

(54) **Verfahren zur Klassifizierung der gesprochenen Sprache in Sprachdialogsystemen**
Method for classifying spoken language in spoken dialogue systems
Procédé de classification de la langue parlée dans des systèmes de dialogue vocal

(30) Priorität: 01.12.2006 DE 102006057159
(43) Veröffentlichungstag der Anmeldung: 04.06.2008
(73) Patentinhaber: Deutsche Telekom AG, 53113 Bonn (DE)
(72) Erfinder: Eckert, Martin, 12527, Berlin (DE); Englert, Roman, 53913, Swisttal (DE); Johannsen, Wiebke, 10961, Berlin (DE); Runge, Fred, 15835, Wünsdorf (DE); van Ballegooy, Markus, 10559, Berlin (DE)
(74) Vertreter: Kewitz, Ansgar

(56) Entgegenhaltungen:
- EP-A- 1 693 828
- WO-A-97/43707
- MARC A ZISSMAN: "Comparison of Four Approaches to Automatic Language Identification of Telephone Speech" IEEE TRANSACTIONS ON SPEECH AND AUDIO PROCESSING, IEEE SERVICE CENTER, NEW YORK, NY, US, Bd. 4, Nr. 1, 1. Januar 1996 (1996-01-01), XP011054175 ISSN: 1063-6676

## Beschreibung

Die Erfindung betrifft eine Verfahren zur Klassifizierung von gesprochener Sprache.

### Gebiet der Erfindung:

Bei der Erstellung einer multilingualen Sprachapplikation mit automatischer Klassifizierung der Sprache (Sprachen-Identifizierung, engl. "Language Identification") des Nutzers stellt sich die Frage, wie der Anrufer motiviert werden kann, frei in seiner Muttersprache zu sprechen. Wie im folgenden Abschnitt beschrieben, existieren verschiedene Verfahren zur Klassifizierung der gesprochenen Sprache, die alle allein auf dem Einsatz eines einzigen Verfahrens zur Verarbeitung des akustischen und/oder phonetischen Sprachstroms beruhen. Da diese Technologien sinnvollerweise ihr Hauptanwendungsgebiet beim Einsatz in Sprachdialogsystemen erschließen, stehen grundsätzlich auch andere bekannte Sprachverarbeitungstechnologien wie z.B. Spracherkennung und/oder Sprecherverifizierung zur Verfügung, die der Erkennung gesprochener Wörter und/oder Sätze bzw. der Verifizierung oder Identifizierung des Sprechers dienen. Weiterhin können in Sprachdialogsystemen zusätzliche nutzerkennungsgebundene Daten vorliegen, die explizit oder implizit zusätzliche Hinweise auf die gesprochene Sprache (z.B. Deutsch, Englisch, Französisch, Spanisch, Türkisch usw.) geben können, die bei einem bestimmten Nutzer einer Sprachdialoganwendung zur Anwendung kommen kann. Die separate Anwendung von Technologien zur Klassifizierung der gesprochenen Sprache ist zum Teil noch fehlerbehaftet. Ziel muss es somit sein, ggf. durch kombinierte Anwendung weiterer Technologien diese Fehlerrate zu verringern.

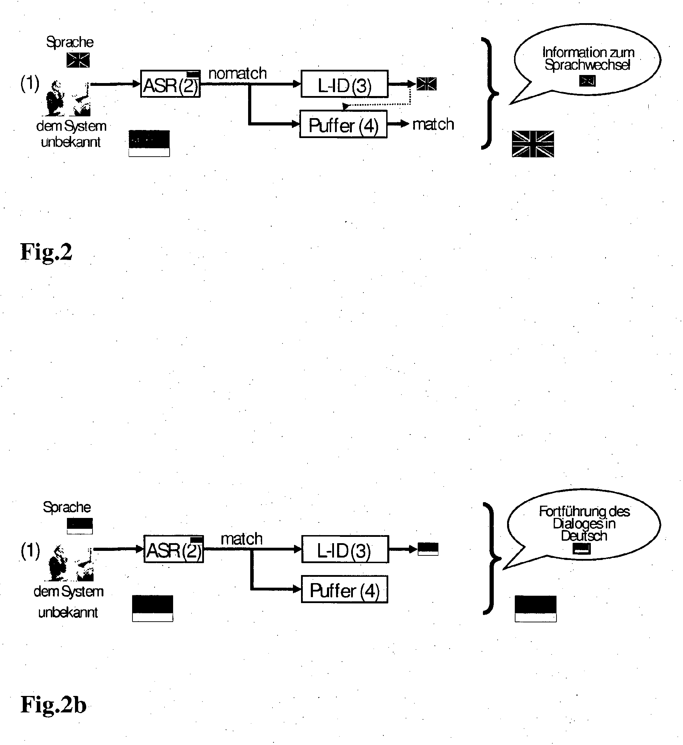

Bekannt ist der allgemeine Aufbau von Dialogsystemen, die der sprachlichen und analog der multimodalen Interaktion mit mindestens einem Nutzer dienen (siehe auch http://www.w3.org/TR/2000/WD-voice-intro-20001204/). Monolinguale Sprachdialoganwendungen erfüllen nur unvollkommen die Anforderungen eines multilingualen Kundenkreises. Aus diesem Grund werden Sprachdialoganwendungen entwickelt, die unter Einsatz der Technologie der Sprachenklassifizierung (engl. Language Identification) anhand einer Äußerung des Anrufers die gesprochene Sprache (engl. Language) feststellen (siehe Fig. 2a und 2b), um möglichst im direkten Anschluss an die erste Äußerung Sprachausgaben und Spracherkennungsgrammatiken auf die entsprechende Sprache umzustellen. Dazu muss der Nutzer darauf hingewiesen werden, dass die Möglichkeit besteht, die Anwendung auch in einer anderen als der Basissprache zu nutzen.

Eine übliche Verfahrensweise, um einen Nutzer auf diese Möglichkeit hinzuweisen, eine Sprachanwendung in einer anderen als einer Hauptsprache zu nutzen, ist die Verlängerung eines einleitenden Sprachausgabeprompts um entsprechende informative Aussagen. Nach der Begrüßung kann so z.B. die Frage an den Nutzer lauten: *"To use the service in English, say English; pour le service en Français, dites Français, um den deutschen Dienst zu nutzen, sagen Sie Deutsch,* ..." (siehe [7]). Je nach Antwort des Nutzers wird die Dialogapplikation ohne weitere Nutzung von Technologien der Sprachenerkennung auf die entsprechende Sprache umgestellt.
Ein weiteres Verfahren zur Ausgabe eines Sprachprompts ohne wesentliche Verlängerung der Ausgabe ist im Dokument 2006E00083 beschrieben worden. Wird die Technologie der Sprachen- Identifizierung eingesetzt, muss der Nutzer nicht mehr explizit die Bezeichnung der Sprache nennen, sondern kann direkt auf eine dem Ziel der Dialogapplikation entsprechende Frage in seiner Muttersprache antworten. Die Formulierung dieser Frage sollte einen Hinweis auf diese Möglichkeit enthalten.

Die genannten Sprachausgaben können sowohl mithilfe aufgezeichneter Sprache, als auch über Sprachsynthese (Text-To-Speech) erzeugt werden. Moderne Text-To-Speech-Systeme verfügen dabei über Verfahren, um unter Adaption der Aussprache an phonetische Besonderheiten verschiedener Sprachen auch gemischt-sprachige, sequentielle Texte akustisch sequentiell wiederzugeben (engl. Mixed Language, siehe auch http://www.loquendo.com/en/news/whitepaper_ML.htm).

Die Sprachenklassifizierung oder auch englisch "Language Identification" (L-ID) findet meist unmittelbar nach dem ersten Ausgabeprompt auf der Basis der ersten Äußerung des Anrufers statt. Wichtigster Punkt ist es daher, den Anrufer zu einer ersten Äußerung in seiner Muttersprache zu motivieren.

Nach der Äußerung des Anrufers wird im allg. durch die Sprachenklassifizierung ermittelt, um welche Sprache es sich gehandelt hat. Sollte dabei eine der möglichen Fremdsprachen sicher erkannt worden sein, so werden automatisch die erforderlichen sprachenabhängigen Einstellungen der Dialogapplikation vorgenommen und in die entsprechende Dialogsprache gewechselt.

Bekannt sind ebenfalls Verfahren in denen die Spracherkennung und/oder Sprachenklassifizierung nicht nur in Echtzeit auf einen akustischen Sprachstrom angewendet wird, sondern auf einen Pufferbereich mit digitalisierten akustischen Informationen in Form von Speicherbereichen oder Dateien angewendet werden.

Die Druckschriften WO 97/43707A und EP 693 828 offenbaren ein System zur Erkennung von Sprache mit einem Spracherkennungsverfahren und einem Sprachklassifizierungsverfahren.

Grundsätzlich ist es möglich, die Grammatik für einen Spracherkenner und einen Sprachdialog in mehreren Sprachen gleichzeitig zu aktivieren, so dass auch gleichzeitig Antworten in mehreren Sprachen erkannt werden können. Bei größeren Vokabularen führt dies jedoch auch zu einer Erhöhung der Verwechslungsmöglichkeiten zwischen einzelnen Elementen der Grammatik, so dass multilinguale Grammatiken nur in ausgewählten Fallen eingesetzt werden.

### Überblick über die Erfindung:

Aufgabe der vorliegenden Erfindung ist es, ein effizientes Sprachenidentifizierungsverfahren und -System bereitzustellen.

Gelost wird diese Aufgabe durch ein Verfahren und eine Vorrichtung nach den unabhängigen Ansprüchen.

Grundlage der Erfindung sind Überlegungen zur sinnvollen Verknüpfung von Ergebnissen von Verfahren, die der Sprachenklassifizierung im Sinne der Identifizierung der gesprochenen Sprache (z.B. Deutsch, English, Französisch, Spanisch, Türkisch usw.) und der Spracherkennung im Sinne der Umwandlung gesprochener Sprache in Zeichenfolge dienen, wobei diese Verknüpfungen auf das Ziel ausgerichtet sind, die Sicherheit der Entscheidung für eine Sprache, in der ein Sprachdialog zwischen System und Nutzer zu führen ist, im Vergleich zu einer separaten Nutzung der Verfahren zu erhöhen.

Die Ergebnisse der Technologien zur Sprachenklassifizierung und der Spracherkennung unterliegen einer gewissen Unsicherheit, so dass es z.B. durchaus möglich ist, dass zwar eine deutsch gesprochenen Äußerung von der Sprachenklassifizierung auch als Äußerung in deutsch erkannt wird, jedoch eine auf Deutsch eingestellte Spracherkennung kein Ergebnis und eine auf Englisch eingestellte Spracherkennung ein sinnvoll scheinendes Wort oder eine Wortfolge als wenig plausibles Ergebnis liefert, was zu Unsicherheit bei der Entscheidung für eine bestimmte Sprache führt. In diesem Fall können z.B. weitere Dialogschritte zur Abklärung der gesprochenen Sprach notwendig werden. Diese Unsicherheiten können z.B. durch Wahrscheinlichkeiten oder Konfidenzwerte ausgedrückt werden.

Ebenfalls möglich ist z.B. die Klassifizierung einer deutsch gesprochenen Äußerung als Englisch und die Erkennung sinnvoller Wortfolgen mit einem auf Deutsch eingestellten Spracherkennungsprozess. Im letzten Fall sollte ein System eher zu weiteren Bewertungen des Sprachstroms veranlasst werden, um plausible Ergebnisse zu erhalten.
Am einfachsten können natürlich Entscheidungen durch eine im System implementierte Entscheidungslogik dann getroffen werden, wenn ein auf eine bestimmte Sprache eingestelltes Spracherkennungssystem sinnvolle Ergebnisse unter Bestätigung der eingestellten Sprache durch die Sprachenklassifizierung liefert.

Um hier die Anzahl von Fehlentscheidungen für eine bestimmte Sprache zu minimieren, ist somit der Einsatz einer Entscheidungslogik zur Kontrolle der Plausibilität von Ergebnisverknüpfungen erforderlich.

Durch das erfindungsgemäß beschriebene mehrstufige, kombinierte Verfahren ergibt sich im Vergleich zum separaten Einsatz der Sprachenklassifizierung eine wesentliche Verringerung der fehlerrate bei der Klassifizierung der gesprochenen Sprache in Sprachdialogsystemen. Vorteil ist, dass keine zusätzlichen Ressourcen benötigt werden, sondern nur durch zusätzlichen kombinierten Einsatz der ohnehin in Sprachdialogsystemen vorhandenen Spracherkennungssysteme verbesserte Erfolgsraten für die Erreichung des Endergebnisses erzielt werden.

Durch die Kombination von Technologie der Sprachenklassifizierung mit den Möglichkeiten eines Sprachdialogsystems und weiteren dort eingesetzten Technologien (z.B. der Spracherkennung) wird die Zuverlässigkeit des Ergebnisses (die ermittelte Sprache) stark verbessert.

### Kurze Beschreibung der Figuren:

Zum besseren Verständnis der Ausführungsformen werden diese mit Bezug zu den Figuren beschrieben. Es zeigt
- Fig. 1: ein Sprachdialogsystem mit Sprachenklassifizierung;
- Fig. 2: eine Darstellung eines Ablaufs der Auswertung des Sprachsignals zum Wechsel der Sprache unter Einsatz der Sprachenklassifizierung;
- Fig. 2b: Darstellung eines Ablaufs der Auswertung des Sprachsignals bei Fortführung des Dialogs in der Hauptsprache;
- Fig. 3: Flussdiagramm des mehrstufigen Verfahrens zur automatischen Sprachenklassifizierung;
- Fig. 4: Flussdiagramm zur Auswertung der ersten Äußerung des Anrufers;
- Fig. 5a: Flussdiagramm zum Verfahren bei der Frage zum Sprachwechsel in Bezug zu Fig. 2;
- Fig. 5b: Flussdiagramm zur multilingualen Eskalation in Bezug zu Fig. 2b;
- Fig. 6: Flussdiagramm eines Verkürzten Verfahrens zur automatischen Sprachenklassifizierung;

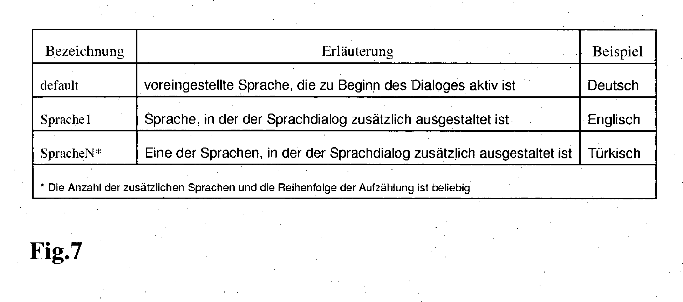

- Fig. 7: Tabelle mit den Bezeichnungen der Sprachen;
- Fig. 8: Tabelle mit Beispiel einer Entscheidungsmatrix für die Stufe 1
- Fig. 9: Tabelle mit Beispiel einher Entscheidungsmatrix für die Stufe 2a
- Fig. 10: Tabelle mit Beispiel einer Entscheidungsmatrix für die Stufe 2b

### Bevorzugte Ausführungsbeispiele:

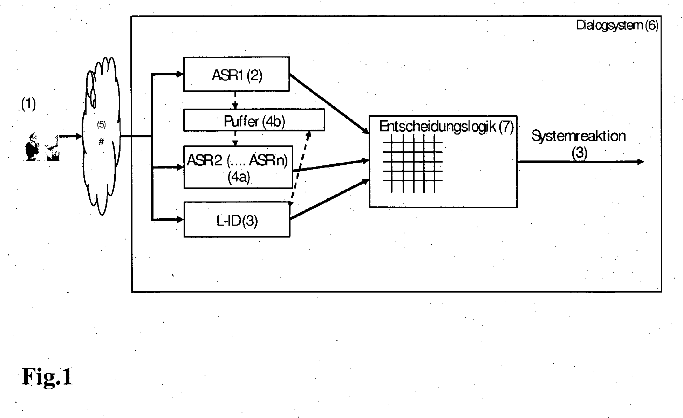

Zur Realisierung der Aufgabenstellung wird ein Sprachdialogsystem 6 mit Mitteln zur Klassifizierung von mindestens zwei Sprachen 3 und mindestens einem Spracherkennungssystem 2 gem. Fig. 1 ausgestattet. Das Spracherkennungssystem besteht entweder aus mindestens einem Spracherkenner der mindestens zwei Sprachen parallel und/oder in Folge verarbeiten kann oder aus mehreren Spracherkennern 2, 4a, die jeweils für die Verarbeitung unterschiedlicher Sprachen geeignet sind. Weitere Bestandteile sind eine Vorrichtung für die Entscheidungslogik 7 und ein Netzwerk 5, über das die Daten von der sprechenden Person übertragen werden.

Der oder die Spracherkenner 2, 4a liefern mindestens folgende Ergebniswerte und/oder Signale mit folgender Bedeutung:
- match (Eine gültige Spracheingabe wurde erkannt)
- nomatch (Die vorliegende Spracheingabe ist nicht gültig) und/oder
- noinput (Es wurde nichts gesagt, die Wartezeit für eine Nutzeräußerung ist abgelaufen)

Das Sprachenklassifizerungssystem (engl. Language Identification System) 3 liefert mindestens folgende Ergebniswerte und/oder Signale mit folgender Bedeutung:
- z.B. Deutsch, Englisch, Französisch oder andere Kennzeichen und/oder Bezeichner für mindestens eine klassifizierte Sprache
- Unknown (Sprache unbekannt)

Weiterhin können noch Werte (Wahrscheinlichkeitswerte, Konfidenzwerte) ausgegeben werden, die die Sicherheit von Ergebnissen widerspiegeln (engl. Confidence).

Wie im letzten Abschnitt erläuternd beschrieben, werden erfindungsgemaß zu den Ergebnissen, die Verfahren der Sprachenklassifizierung 3 liefern, auch die Resultate der Spracherkennungsverfahren 2 und 4 herangezogen. Die Äußerung, die der Sprachenklassifizierung 3 übergeben wird, wird ebenfalls mittels Spracherkennung ausgewertet 3 und 4. Hierbei wird im ersten Schritt nur ausgewertet, ob es sich bei dem Ergebnis um ein match (es wurde eine gültige Eingabe erkannt), ein nomatch (es wurde keine gültige Eingabe erkannt) oder noinput (es wurde nichts gesagt) handelt. Der eigentliche Inhalt der Eingabe spielt an dieser Stelle keine Rolle. Sollte die Sprachenklassifizierung 3 eine andere Sprache als die aktuell aktive Hauptsprache zuruckgeben, so wird das im Puffer gehaltene signal ein zweites Mal über die Spracherkennung 4 ausgewertet, dieses Mal allerdings auf Basis der Grammatik der von der Sprachenklassifizierung 3 erkannten Sprache. Auch hier gibt es wieder die beiden prinzipiellen Zustände: match (gültige Eingabe) oder nomatch (ungültige Eingabe).

Fig. 2a zeigt schematisch den Ablauf und den Signalfluss der Auswertung des Sprachsignals. Das ausgewählte Beispiel stellt einen Ablauf dar, bei dem ein englischsprachiger Anrufer mit einer deutschsprachigen Sprachdialoganwendung verbunden wird: Ein englischsprachiger Anrufer ruft eine deutsche Sprachdialoganwendung an und spricht von Anfang an Englisch. Der auf Deutsch eingestellte Spracherkenner 2 erkennt die Äußerung nicht und liefert demzufolge ein nomatch (ungültige Eingabe). Die Sprachenklassifizierung 3 klassifiziert die Äußerung als Englisch. Das im Puffer 4 gehaltene Signal wird daraufhin noch einmal über einen auf Englisch eingestellten Spracherkenner ausgewertet und erkannt (match, gültige Eingabe). Dies kann ein anderer Spracherkenner oder der in Grammatik und akustischen Modellen inzwischen auf Englisch umgestellte ursprünglich im beschriebenen ersten Verfahren auf Deutsch eingestellte Spracherkenner sein. Der Dialog wird daraufhin in Englisch fortgeführt. Es ist zu beachten, dass die einzelnen Module auch parallel arbeiten können insbesondere dann, wenn ausreichend Rechenleistung zur Verfügung steht.

Die Fig. 2b zeigt dic Fortführung des Verfahrens für den Fall, dass die Sprache korrekt erkannt wurde. Es wird der Dialog mit der voreingestellten Sprache weitergeführt.

Die Entscheidung, wie nach der Spracheingabe weiter verfahren wird, hängt also von der Kombination der Ergebnisse der Sprachenklassifizierung 3 und der Spracherkennung 2 ab. Sollte sich der Anrufer 1 nicht aktiv äußern, so liefert die Spracherkennung den Wert noinput (fehlende Eingabe). Auch dieser Fall ist bei einer Entscheidung zu berücksichtigen.

In welcher Art und Weise nach der Auswertung der ersten Äußerung weiter verfahren wird, kann individuell gestaltet werden und hängt in erster Linie von den zur Verfügung stehenden Ressourcen ab. Prinzipiell ist die Entscheidung zu treffen, ob neben der z.B. deutschen Sprachdialoganwendung identisch strukturierte Sprachdialoganwendungen in den Zielsprachen existieren sollen. Der Vorteil dieses hier als allgemein bezeichneten Ansatzes ist, dass alle Anrufer im Sprachdialog gehalten werden und kein erhöhtes Anruf-Volumen anfällt. Nachteil ist die aufwendige Übersetzung in andere Sprachen, da neben der Erstellung der Sprachprompts auch berücksichtigt werden muss, dass Grammatiken für die Zielsprachen erstellt werden müssen. Bei Sprachapplikationen mit ständig wechselnden aktuellen Inhalten erhöht sich auch der Pflegeaufwand entsprechend.
Werden nur wenige fremdsprachige Anrufer erwartet, so ist der Aufwand zur Erstellung der fremdsprachigen Dialoganwendung u.U. nicht gerechtfertigt. Hier könnte ein verkürzter Ansatz in der Weiterleitung zu einem fremdsprachigen Berater bestehen. Nachfolgend werden Lösungen und Anwendungsbeispiele zu beiden Ansätzen vorgestellt. Denkbar sind ebenfalls Mischlösungen.

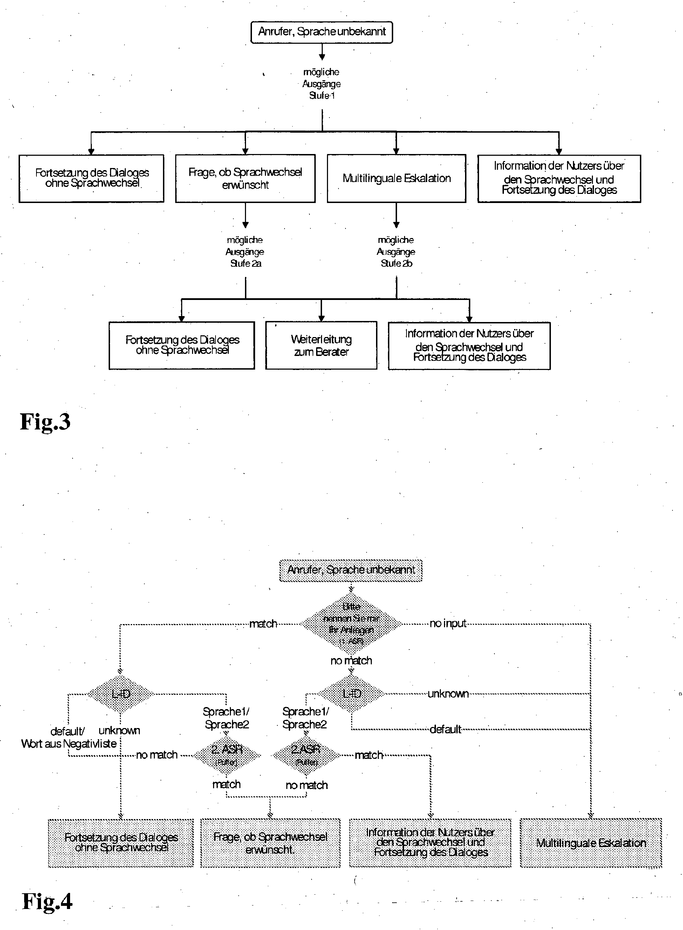

Ziel der kombinierten Identifizierung der gesprochenen Sprache beim allgemeinen Ansatz ist es, den Anrufer dem Sprachdialog zuzuordnen, der in seiner Heimatsprache ausgestaltet ist. Dazu dient erfindungsgemäß das folgende mehrstufige Verfahren (siehe auch Fig. 3).
Nach der ersten Äußerung des Anrufers wird der Dialog in den Fallen, in denen die Entscheidung der Sprachenklassifizierung eher oder sicher auf die aktuelle Sprache weist, ohne Sprachwechsel fortgeführt (Weiter ohne Sprachwechsel). Ist eine Zuordnung zu einer anderen als der aktuellen Sprache als sicher einzustufen, so erhält der Anrufer eine Information zum Sprachwechsel und der Dialog wird in der neuen Zielsprache fortgesetzt (Information über Sprachwechsel und Fortsetzung des Dialoges). In diesen beiden Fällen wird danach die Sprachenklassifizierung an dieser Stelle deaktiviert.
Ist hingegen nur eine Tendenz zu einer anderen Zielsprache zu erkennen, so erfolgt eine direkte Nachfrage, ob der Anrufer in der erkannten Zielsprache fortfahren möchte (Frage Sprachwechsel). Die Antwort auf diese Frage wird in der zweiten Stufe (Stufe 2a) ebenfalls mit Hilfe der Sprachenklassifizierung ausgewertet. Je nach Antwort auf die Frage und/oder Kombination mit dem Klassifizierungsergebnis wird die Dialogsprache entweder beibehalten oder gewechselt. Sollte die Eingabe des Anrufers zu keiner schlüssigen Zuordnung führen, so kann der Anrufer zu einem Berater weitergeleitet werden, der sowohl die aktuelle Sprache als auch die ggf. ermittelte Alternativsprache beherrschen sollte. Ist das Ergebnis der Sprachenklassifizierung in der ersten Stufe so unsicher, dass keine klare Tendenz zu einer Sprache erkannt werden kann (z.B. durch eine fehlende Eingabe (noinput)), so gelangt der Anrufer in die multilinguale Eskalation. Hier wird er in allen vorgesehenen (z.B. drei) möglichen Sprachen noch einmal aufgefordert, seinen Wunsch zu äußern. Auch hier wird in der zweiten Stufe (Stufe 2b) erneut die Sprachenklassifizierung eingesetzt. In Abhängigkeit des Ergebnisses wird auch in diesem Fall der Dialog fortgeführt bzw. zu einem Berater weitervermittelt, der im besten Fall alle möglichen Zielsprachen beherrscht.
Die nächsten Abschnitte beschreiben, wie die Ergebniswerte die Systementscheidung steuern. Details hierzu können der Figur 4 entnommen werden.

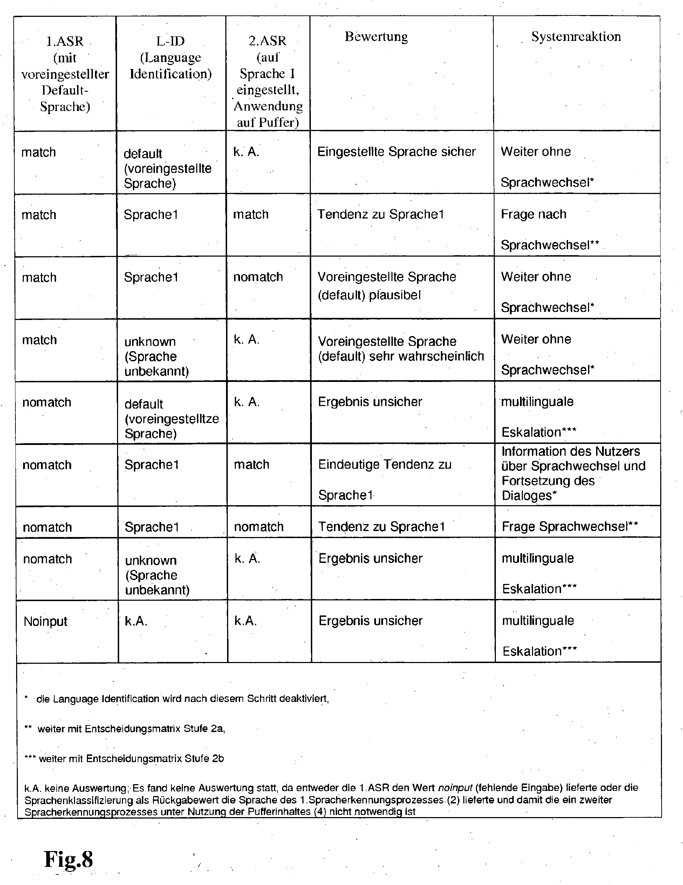

Wie bereits erläutert, beruht das erfindungsgemäße Verfahren auf der automatisierten Sprachenklassifizierung, um so den Anrufer der richtigen Zielsprache zuordnen zu können. Insgesamt gibt es mehrere Teilaspekte, bei denen die Sprachenklassifizierung eingesetzt wird. Die genaue Arbeitsweise in diesen drei Schritten wird im Folgenden detailliert beschrieben. Dabei werden die Bezeichnungen gem. Tabelle in Fig. 8 für die implementierten Sprachen benutzt. Das erfindungsgemäße Verfahren beruht auf der kombinierten Auswertung der anfänglichen Ergebnisse mindestens eines Spracherkennungsverfahrens, der Sprachenklassifzierung und mindestens einem ggf. anschließenden zweiten Spracherkennungsverfahren. Da Klassifikatoren dieser Art immer mit einem gewissen Prozentsatz an Fehlerkennung behaftet sind, sind all möglichen Kombinationen der drei Auswertungsstufen genau zu betrachten, um das System sinnvoll auf die Situation reagieren zu lassen. Dabei werden einige grundsätzliche Regeln beachtet:
Liegt ein gültiges Spracherkennungsergebnis vor, so wird im Zweifelsfall darauf zurückgegriffen, da in diesem Fall anzunehmen ist, dass sich der Anrufer in der voreingestellten Sprache (default) geäußert hat.

Die Sprache wird nur dann automatisch und ohne Nachfragen geändert, wenn alle drei Auswertungsergebnisse die These stützen.

Sollte eine deutliche Tendenz zu einer Sprache erkennbar sein, dann wird der Anrufer gefragt, ob ein Sprachwechsel erwünscht ist.

Kann keine der oben genannten Regeln angewendet werden, dann ist in einem nächsten Schritt die multilinguale Eskalation zu nutzen.

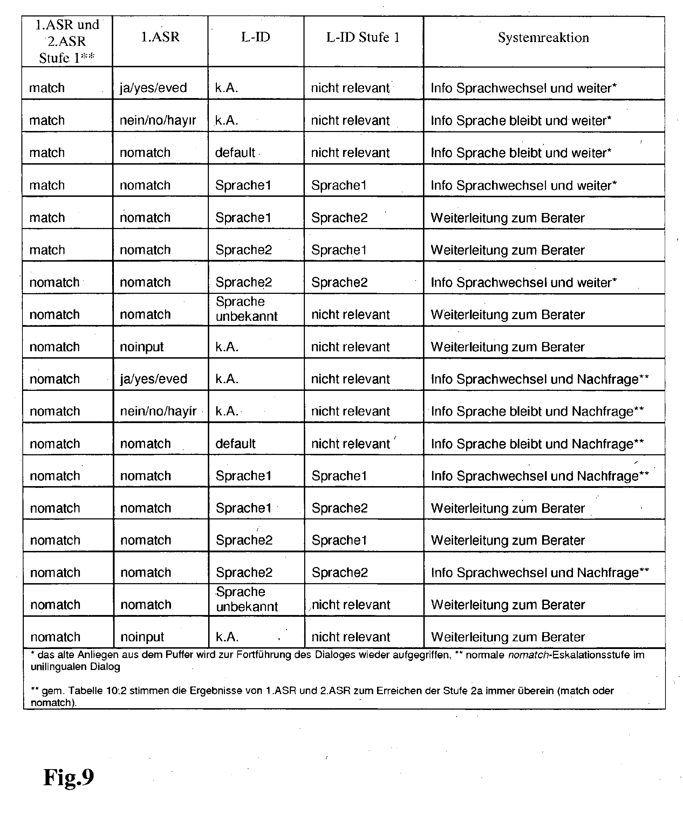

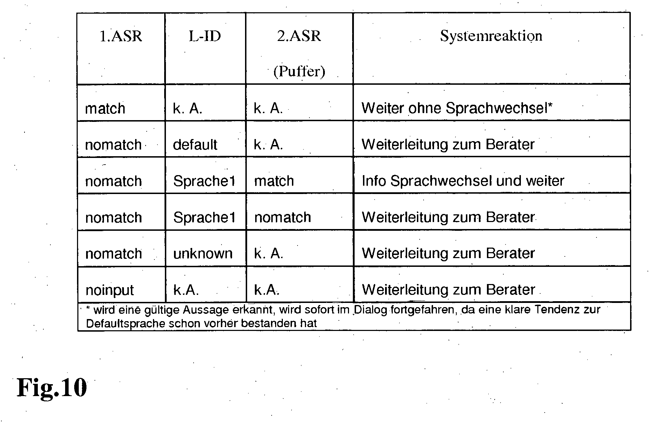

Die Tabelle in Fig. 8 zeigt die möglichen Kombinationen und entsprechende Systemreaktionen der ersten Stufe des kombinierten Sprachenklassifizierungsverfahrens. Dabei wird in Spalte 2 (L-ID) nur die erste Fremdsprache angegeben; die Reaktion ist für jede weitere Fremdsprache identisch. Das Flussdiagramm in Fig. 4 verdeutlicht noch einmal den Ablauf des Entscheidungsbaums.
Nachdem der Anrufer beispielsweise sein Anliegen geäußert hat, wird im ersten Schritt, der Stufe 1 eine Auswertung über den aktuellen Spracherkenner (2) durchgeführt. Liegt als Ergebniswert ein noinput (fehlende Eingabe) vor, so wird eine multilinguale Eskalationsstrategie (siehe auch Tabelle in Fig. 10) eingesetzt, um den Anrufer (1) zu einer Äußerung (bestenfalls in seiner Muttersprache) zu motivieren. Auf eine detaillierte Beschreibung der multilingualen Eskalation wird später eingegangen.
Liefert der Spracherkenner (2) ein match (gültige Eingabe), so ist die Wahrscheinlichkeit hoch, dass es sich um die voreingestellte Sprache (default), also die aktuell aktive Sprache handelt. Dennoch sind Fehlerkennungen denkbar, so dass als nächstes die Auswertung der Sprachenklassifizierung (4) folgt. Liefert diese ebenfalls die voreingestellte Sprache (default) als Ergebnis, so wird der Dialog ohne Sprachwechsel fortgeführt, die Sprachenklassifizierung (3) kann deaktiviert werden.
Das gleiche gilt für die Äußerungen, bei denen die Sprache nicht zugeordnet werden kann (unknown). Diese Entscheidung ist darin begründet, dass eine genauere Auswertung der Sprachenklassifizierung (3) in diesem Fall nicht möglich ist. Da aber als Ergebnis des ersten Spracherkennungsverfahrens (2) eine gültige Äußerung vorgelegen hat, wird auf Basis dieser Äußerung mit dem Dialog fortgefahren. Geht aus dem Ergebnis der Sprachenklassifizierung (3) hervor, dass es sich um eine andere Sprache handelt (z.B. Sprache1/Sprache2; default/Sprachel), so wird die im Puffer (4) gehaltene Äußerung ein weiteres Mal über einen Spracherkenner ausgewertet, dieses Mal mit der Grammatik und den akustischen Modellen der Zielsprache. Ist das Ergebnis ein match (gültige Eingabe), so liegt die Tendenz vor, dass der Anrufer eine andere als die voreingestellte Sprache genutzt hat. Ihm wird deshalb der Wechsel, zu der erkannten Zielsprache angeboten. Dieses Angebot erfolgt sowohl in der neuen Zielsprache als auch in der aktuell eingestellten Sprache. Liefert der zweite Spracherkennungsprozess über den Pufferinhalt (4) ein nomatch (ungültige Eingabe), so greift auch in diesem Fall das match (gültige Eingabe) aus dem ersten Spracherkennungsprozess (2). Der Dialog wird dann ohne Sprachwechsel weiter fortgeführt. Im Falle, dass der erste Spracherkennungsprozess (2) ein nomatch (ungültige Eingabe) liefert, wird ebenfalls die Sprachenklassifizierung (3) eingesetzt. Liefert diese den Wert unknown (Sprache konnte nicht ermittelt werden) oder default (voreingestellte Sprache), ist eine weitere Auswertung durch den zweiten Spracherkennungsprozess über den Puffer (4) nicht sinnvoll. Es sollte der Weg der multilingualen Eskalation gegangen werden, d.h. der Anrufer wird in allen vorgesehenen (z.B. drei) Sprachen aufgefordert, seinen Wunsch zu wiederholen. In den anderen Fällen wird zusätzlich eine Auswertung durch den zweiten Spracherkennungsprozess über den Puffer (4) in der erkannten Zielsprache durchgeführt. Liefert diese ein match (gültige Eingabe), so liefern alle drei Erkennungsstufen das konsistente Ergebnis, dass es sich um eine Äußerung in einer anderen als der voreingestellten Sprache (default) handelt. Der Anrufer wird über den Sprachwechsel informiert und der Dialog wird in der neuen Zielsprache fortgesetzt. Liefert der zweite Spracherkennungsprozess über den Puffer (4) ebenfalls ein nomatch (ungültige Eingabe), kann eine Aussage in dieser Deutlichkeit nicht getroffen werden. Da dennoch eine starke Tendenz in Richtung einer neuen Zielsprache bestehen bleibt, wird dem Anrufer auch in diesem Fall angeboten, die Sprache zu wechseln.
An dieser Stelle sei noch einmal darauf hingewiesen, dass es sich bei diesem Verfahren um eine Möglichkeit der Ausgestaltung handelt. Wird das ungefragte Umschalten in eine neue Zielsprache als zu hart empfunden, so kann dieser Fall leicht durch eine andere Handlungsweise ausgetauscht werden. Die Entscheidungsmatrix wird so in das System implementiert, dass das Ändern einer Systemreaktion durch einen einfachen Tabelleneintrag vorgenommen werden kann. Dies gilt analog für die Entscheidungsmatrix Stufe 2a (Tabelle in Fig. 9) und Stufe 2b (Tabelle in Fig. 10).

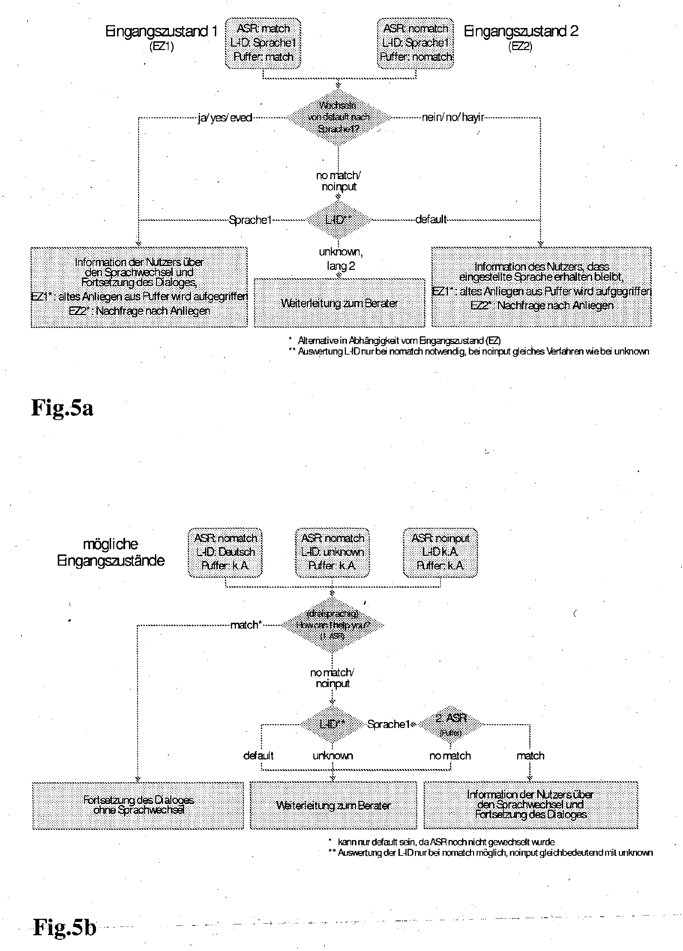

Die Stufe 2a (siehe Tabelle in Fig. 9) des Verfahrens wird erreicht, wenn eine eindeutige Tendenz zu einer Sprache erkennbar ist. Der Anrufer wird in diesem Fall gefragt, ob er in der erkannten zweiten Sprache fortfahren möchte. Da immer noch eine Unsicherheit bzgl. der Zielsprache besteht und man nicht davon ausgehen kann, dass der Anrufer die Fremdsprache wirklich versteht, wird diese Frage z.B. in zwei Sprachen gestellt. Befindet sich der Anrufer z.B. in einer deutschen Sprachdialoganwendung und besteht die Wahrscheinlichkeit, dass er Englisch gesprochen hat, dann lautet die entsprechende Frage: "Do you want to continue in Englisch? Möchten Sie in Englisch weitermachen?". Die Antwort auf diese Frage kann von dem Anrufer in jeder der vorgesehenen (z.B. drei) Sprachen gegeben werden, da an dieser Stelle eine Grammatik inkl. entsprechender akustischer Modelle implementiert ist, die "ja/nein" in allen vorgesehenen Sprachen versteht. Da eine universelle Grammatik im Einsatz ist, entfällt der zweite Spracherkennungsprozess, da sie kein neues Ergebnis liefern kann.
Die Frage nach dem Sprachwechsel stelle gleichzeitig eine weitere Besonderheit der Stufe 2a dar, da durch diese Zwischenfrage das eigentliche Anliegen des Anrufers "unterbrochen" wird. Im Falle eines vorherigen match (gültige Eingabe) in der Stufe 1. wird der Inhalt des Spracherkenners gespeichert, um - nach Beantwortung der Frage bzgl. des Sprachwechsels - an der gleichen Stelle fortfahren zu können, da der Dialog unterbrochen wurde.
Bei der Entscheidungsmatrix 2a (Tabelle in Fig. 9) muss also auch der Ausgang der beiden Spracherkennungsprozesse berücksichtigt werden. Da die Frage nach dem Sprachwechsel nur dann erreicht werden kann, wenn entweder beide Erkennungsprozesse ein match (gültige Eingabe) oder beide Erkennungsprozesse ein nomatch (ungültige Eingabe) liefern, ist bei der Aufstellung der Entscheidungsmatrix eine pauschale Betrachtung in match/nomatch (gültige/ungültige Eingabe) ausreichend, d.h. es muss an dieser Stelle keine Unterscheidung getroffen werden, welches der beiden Erkennungsprozesse das Ergebnis liefert bzw. für den weiteren Verlauf genutzt wird. Der Zustand match (gültige Eingabe) wird in diesem Fall durch die möglichen Antworten "ja" und "nein" ersetzt, da diese den expliziten Wunsch des Anrufers darstellen und in jedem Fall berücksichtigt werden sollten. Daher wird in diesen Fällen auch auf eine weitere Auswertung mit der Sprachenklassifizierung verzichtet.
Eine weitere Besonderheit ist, dass es theoretisch möglich - wenn auch sehr unwahrscheinlich - ist, dass die Sprachenklassifizierung aus der ersten Stufe eine andere Sprache erkennt, als die der Stufe 2a. Diese Informationen sind daher an den gegebenen Stellen mit zu berücksichtigen. Die beiden abgebildeten Eingangszustände in Fig. 5a zeigen die möglichen Ergebniskombinationen aus Stufe 1, die zu der Frage nach dem Sprachwechsel führen. Generell ist anzumerken, dass bei der beispielhaften Spezifikation des Verfahrens im Zweifelsfall angenommen wird, dass es sich bei dem Anrufer um eine Person handelt, die die voreingestellte Sprache (default) benutzt.
Abschließend ist zu sagen, dass nach der Stufe 2a die Sprachenklassifizierung deaktiviert werden kann, und danach jede Kombination der Ergebniswerte in einen Zustand resultieren muss, in dem der Wunsch des Anrufers bedient werden kann. Auch an dieser Stelle sei noch einmal darauf hingewiesen, dass es sich bei diesem Verfahren um eine Möglichkeit der Ausgestaltung handelt.

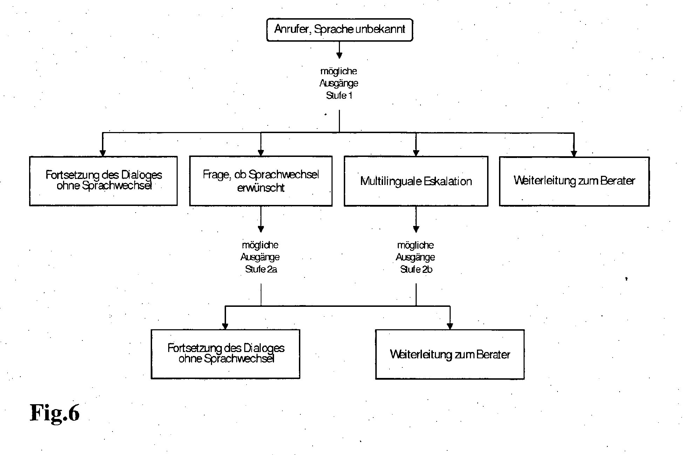

Die multilinguale Eskalation, hier Stufe 2b genannt (siehe Tabelle Fig. 10), ist in ihrem Aufbau weit weniger komplex, als die Stufe 2a, in der nach einem Sprachwechsel gefragt wird. Dies liegt zum einen darin begründet, dass der Dialogfluss nicht durch eine zusätzliche Frage unterbrochen wird. Zum anderen sind die Eingangszustände weit weniger komplex. Die multilinguale Eskalation kann nur bei den Kombinationen: nomatch-default (ungültige Eingabe - eingestellte Sprache), nomatch-unknown (ungültige Eingabe - Sprache konnte nicht ermittelt werden), und noinput (keine Eingabe) (siehe Fig. 8) erreicht werden. Es kann also schon fast davon ausgegangen werden, dass es sich entweder um einen Anrufer in der aktuellen Sprache handelt, oder dass der Anrufer in einer Sprache gesprochen hat, die nicht implementiert ist. Da noch keine verwertbare Aussage vorliegt, muss der Nutzer in jedem Fall aufgefordert werden, sich erneut zu äußern. Auf eine Auswertung der Ergebnisse der ersten Stufe kann also verzichtet werden. Da auch nach der multilingualen Eskalation in jedem Fall die kombinierte Sprachenklassifizierung verlassen wird, kann der Anrufer in dem Fall, dass erneut keine Zuordnung getroffen werden kann, zu einem Berater mit entsprechenden Fremdsprachen-Kenntnissen weitergeleitet werden.
Die drei abgebildeten Eingangszustände in Fig. 5b zeigen die möglichen Ergebniskombinationen aus Stufe 1. Generell ist anzumerken, dass bei, der beispiclhaften Spezifikation des Verfahrens im Zweifelsfall angenommen wird, dass es sich bei dem Anrufer um eine Person handelt, die die eingestellte Sprache (default) benutzt.
Auch an dieser Stelle sei noch einmal darauf hingewiesen, dass es sich bei auch den hier mit Hilfe der Entscheidungsmatrix beschriebenen Verfahrensweisen um eine Möglichkeit der Ausgestaltung handelt.
Das in den letzten Abschnitten beschriebene allgemeine Verfahren stellt eine Lösung dar, in der der Sprachdialog komplett in alle Zielsprachen gespiegelt wird. Dies stellt insbesondere bei schnell wechselnden Inhalten einen hohen Aufwand dar, der nicht in allen Fällen gerechtfertigt ist. Eine Alternative dazu stellt die Weiterleitung an einen Berater im hier so genannten verkürzten Ansatz (siehe auch Fig. 6) dar, der die entsprechende Sprache beherrscht. Denkbar wären auch Mischlösungen, bei denen nur die am häufigsten frequentierten Dialogzweige für alle Sprachen dargestellt werden.
Für eine gezielte Weiterleitung an einen Berater mit entsprechenden Fremdsprachenkenntnissen findet die automatische Sprachenklassifizierung ebenfalls Anwendung. Das Prinzip unterscheidet sich nicht von dem vorgestellten allgemeinen Verfahren, da auch hier der Anrufer im ersten Schritt auf eine multilinguale Sprachdialoganwendung trifft. Erst nach der ersten Äußerung ist das System in der Lage, die Sprache zuzuordnen und zu entscheiden, wohin der Anrufer vermittelt wird.
Bei dem hier vorgestellten verkürzten Verfahren sollen prinzipiell alle fremdsprachigen Anrufer an einen Berater der eigenen Landessprache vermittelt werden. Zusätzlich soll vermieden werden, dass Anrufer der Hauptsprache unnötig zum Berater vermittelt werden. Das Verfahren ist deshalb auch zweistufig aufgebaut.
In der ersten Stufe werden die Anrufer, die eindeutig einer Sprache zugeordnet werden können, entsprechend den Vorgaben weitervermittelt. Die Anrufer der Hauptsprache werden zur entsprechenden Sprachdialoganwendung weitergeleitet und die fremdsprachigen Anrufer werden mit einem Berater, der ihre Landessprache spricht, verbunden.
Alle anderen Anrufer werden je nach Ergebnis der Auswertung der ersten kombinierten Sprachenklassifizierung entweder direkt gefragt, ob sie eine andere Sprache sprechen möchten, oder aber sie gelangen zur multilingualen Eskalation. Diese beiden Stufen werden analog zu den im allgemeinen Verfahren beschriebenen Stufen durchgeführt. Anstelle der Weiterleitung in die entsprechende Sprachdialoganwendung wird auch hier wieder nur der Anrufer in der Hauptsprache zur Sprachdialoganwendung weitergeleitet, alle anderen Anrufer werden zu einem Berater in der jeweiligen Landessprache vermittelt. Sollte die Sprache auch nach der zweiten Stufe der kombinierten Sprachenklassifizierung nicht ermittelt worden sein, so wird der Anrufer im Idealfall mit einem Berater verbunden, der alle drei Sprachen beherrscht. Sollte dies nicht möglich sein (z.B. weil deutlich mehr Sprachen eingebunden sind), so sollte ein Berater gewählt werden, der mögliche Schlüsselsprachen (z.B. Englisch oder Spanisch) beherrscht.

Es versteht sich, dass Teile oder sogar die vollständige Erfindung durch Computerprogramme, die in Kombination mit Hardware arbeiten, erreicht werden kann.

Die bevorzugte Ausführungsform stellt keinerlei Einschränkungen dar. Sie dient lediglich dem Verständnis. Der Schutz wird durch die folgenden Ansprüche bestimmt.

## Patentansprüche

1. Verfahren zur Klassifizierung von mindestens zwei Sprachen in einem automatischen Dialogsystem (6), das digitalisierte Spracheingaben verarbeitet, umfassend folgende Schritte:
Anwendung mindestens eines Spracherkennungsverfahrens (2, 4a) und mindestens eines Sprachenklassifizierungsverfahrens (3) auf die digitale Spracheingabe, um durch logische Auswertung (7) der Ergebnisse der Verfahren die Sprache der Spracheingabe zu identifizieren,
**dadurch gekennzeichnet, dass** das Sprachenklassifizierungsverfahren und das Spracherkennungsverfahren zeitlich parallel durchgeführt werden.

2. Das Verfahren nach dem vorhergehenden Anspruch, wobei das Sprachenklassifizierungsverfahren nach dem Spracherkennungsverfahren angewandt wird, falls das Spracherkennungsverfahren die Spracheingabe nicht erkennen konnte,
um dann die Spracheingabe zu klassifizieren und falls die Klassifizierung erfolgreich war, wird das Spracherkennungsverfahren und/oder mindestens ein Parameter des Spracherkennungsverfahrens gewechselt, so dass die Spracherkennung mit dem gewechselten und/oder veränderten Spracherkennungsverfahren durchgeführt wird.

3. Das Verfahren nach einem oder mehreren der vorhergehenden Ansprüche, wobei die Ergebnisse mindestens eines Spracherkennungsverfahrens und/oder mindestens eines Sprachenklassifizierungsverfahrens in Bezug auf die Spracheingabe aus mindestens einem Ergebniszustand bestehen.

4. Das Verfahren nach einem oder mehreren der vorhergehenden Ansprüche, wobei die logische Auswertung der zugeführten Ergebnisse mindestens eines Spracherkennungsverfahrens und, falls notwendig, mindestens eines Sprachenklassifizierungsverfahrens in Bezug auf die Spracheingabe aus mindestens einer zeichenfolge und/oder einem digitalen Symbol und/oder einer Symbolfolge bestehen.

5. Das Verfahren nach einem oder mehreren der vorhergehenden Ansprüche, wobei die Spracheingabe digitalisiert zwischengespeichert wird.

6. Das Verfahren nach dem vorhergehenden Anspruch, wobei zusätzlich digitalisierte Sprachdaten welche aus der Spracheingabe ermittelt wurden, zwischengespeichert werden, wobei die Sprachdaten aus einem oder mehreren der folgenden Elemente bestehen können: merkmalsextrahierte Daten, Audiodaten.

7. Das Verfahren nach einem oder mehreren der beiden vorhergehenden Ansprüche, wobei die zwischengespeicherten Daten durch mindestens ein Spracherkennungsverfahren beschrieben werden.

8. Das Verfahren nach dem vorhergehenden Anspruch, wobei die zwischengespeicherten Daten durch mindestens ein Sprachenklassifizierungsverfahren beschrieben werden.

9. Das Verfahren nach einem oder mehreren der vorhergehenden 3 Ansprüche, wobei die zwischengespeicherten Daten der Zwischenspeicherung durch mindestens einen Verfahren, welcher zur Vorverarbeitung digitalisierter gesprochener Sprache geeignet ist, beschrieben werden, insbesondere durch Echokompensationsverfahren, Geräuschreduktionsreduktionsverfahren, Codierverfahren.

10. Das Verfahren nach einem oder mehreren der vorhergehenden Ansprüche, wobei das Ergebnis der Auswertung der Entscheidungslogik den weiteren Dialogverlauf mit dem Nutzer beeinflussen.

11. Das Verfahren nach einem oder mehreren der vorhergehenden Ansprüche, wobei eine Entscheidungslogik und/oder Teile davon in Form von administrativ und/oder programmtechnisch veränderbaren deterministischen Regeln abgelegt sind.

12. Das Verfahren nach einem oder mehreren der vorhergehenden Ansprüche, wobei die Entscheidungslogik und/oder Teile davon über die Sammlung und Auswertung statistisch relevanter Sprachdaten erstellt wurde, insbesondere über neuronale Netze und/oder Hidden-Markov-Modelle und/oder Fuzzy Logic.

13. Das Verfahren nach einem oder mehreren der vorhergehenden Ansprüche, umfassend folgende Schritte:
- Liegt ein gültiges Spracherkennungsergebnis vor, so wird dieses beibehalten, für zukünftige Dialoge, da in diesem Fall anzunehmen ist, dass sich der Anrufer in der voreingestellten Sprache (default) geäußert hat;
- Die Sprache wird nur dann automatisch und ohne Nachfragen geändert, wenn ein erster Erkennungsversuch eines Spracherkennungsverfahrens in einer ersten Sprache fehl schlug, das Sprachenklassifizierungsverfahren eine neue Sprache erkannt hat, und wenn ein zweiter Erkennungsversuch eines Spracherkennungsverfahrens in der neuen vom Sprachenklassifizierungsverfahren erkannten Sprache erfolgreich ist,
- Kann keine der oben genannten Regeln angewendet werden, dann ist in einem nächsten Schritt eine multilinguale Eskalation zu nutzen.

14. Das Verfahren nach dem vorhergehenden Anspruch, wobei, falls eine deutliche Tendenz zu einer Sprache erkennbar ist, durch Erkennung einer Sprache mit einer gewissen Wahrscheinlichkeit und einer entsprechenden Klassifizierung dann der Anrufer gefragt wird, ob ein Sprachwechsel erwünscht ist.

15. Das Verfahren nach einem oder mehreren der vorhergehenden zwei Ansprüche, wobei die Ergebnisse der Erkennung wie folgt sind:
- ein match (es wurde eine gültige Eingabe erkannt), diese kann auch durch Wahrscheinlichkeits- und/oder Konfidenzwerte bestimmt sein;
- ein nomatch (es wurde keine gültige Eingabe erkannt), diese kann auch durch Wahrscheinlichkeits- und/oder Konfidenzwerte bestimmt sein; oder
- ein noinput (es wurde nichts gesagt) handelt; wobei in Abhängigkeit dieser Ergebnisse, die Sprache gewechselt, beibehalten oder Dialoge mit dem Benutzer gestartet werden.

16. Vorrichtung zur Klassifizierung von mindestens zwei Sprachen in einem automatischen Dialogsystem (6), das digitalisierte Spracheingaben verarbeitet, mit Mitteln und einer Einrichtung der Mittel, die die Anwendung mindenstens eines Spracherkennungsverfahrens (2, 4a) und eines Sprachklassifizierungsverfahrens (3) auf die digitalisierte Spracheingabe, um durch logische Auswertung (7) der Ergebnisse der Verfahren die Sprache der Eingabe zu erkennen, erlauben, **dadurch gekennzeichnet, dass** die Mittel so eingerichtet sind, dass das Verfahren zur Sprachenklassifizierung und Spracherkennung zeitlich parallel durchgeführt werden.

17. Die Vorrichtung nach dem vorhergehenden Vorrichtungsanspruch, wobei die Mittel und ihre Einrichtung so ausgebildet sind, dass das Sprachenklassifizierungsverfahren nach dem Spracherkennungsverfahren angewandt wird, falls das Spracherkennungsverfahren die Spracheingabe nicht erkennen konnte, um dann die Eingabe zu klassifizieren und falls die Klassifizierung erfolgreich war, das Spracherkennungsverfahren und/oder mindestens ein Parameter des Spracherkennungsprozesses gewechselt wird, so dass die Spracherkennung mit dem gewechselten Spracherkennungsverfahren und/oder mindestens einem veränderten Parameter des Spracherkennungsverfahrens durchgeführt wird.

18. Die Vorrichtung nach einem oder mehreren der vorhergehenden Vorrichtungsansprüche, wobei die Mittel so eingerichtet sind, dass die Ergebnisse mindestens eines Spracherkennungsverfahrens und/oder mindestens eines Sprachenklassifizierungsverfahrens in Bezug auf die Spracheingabe aus mindestens einem Ergebniszustand bestehen.

19. Die Vorrichtung nach einem oder mehreren der vorhergehenden Vorrichtungsansprüche, wobei die Mittel so eingerichtet sind, dass die logische Auswertung der zugeführten Ergebnisse mindestens eines spracherkennungsverfahrens und, falls notwendig, mindestens eines sprachenklassifizierungsverfahrens in Bezug auf die Spracheingabe aus mindestens einer Zeichenfolge und/oder einem digitalen Symbol und/oder einer Symbolfolge bestehen.

20. Die Vorrichtung nach einem oder mehreren der vorhergehenden Vorrichtungsansprüche, wobei die Mittel so eingerichtet sind, dass die Spracheingabe digitalisiert zwischengespeichert wird.

21. Die Vorrichtung nach dem vorhergehenden Vorrichtungsanspruch, wobei die Mittel so eingerichtet sind, dass zusätzlich Merkmalsvektoren und/oder andere digitalisierte Daten, welche aus der Spracheingabe ermittelt wurden, zwischengespeichert werden, wobei die Sprachdaten aus einem oder mehren der folgenden Elemente bestehen können: Merkmalsextrahierte Daten, Audiodaten.

22. Die Vorrichtung nach dem vorhergehenden Vorrichtungsanspruch, wobei die Mittel so eingerichtet sind, dass die zwischengespeicherten Daten durch mindestens ein Spracherkennungsverfahren beschrieben werden.

23. Die Vorrichtung nach dem vorhergehenden Vorrichtungsanspruch, wobei die Mittel so eingerichtet sind, dass die zwischengespeicherten Daten durch mindestens ein Sprachenklassifizierungsverfahren beschrieben werden.

24. Die Vorrichtung nach einem oder mehreren der vorhergehenden 3 Vorrichtungsansprüche, wobei die Mittel so eingerichtet sind, dass die zwischengespeicherten Daten der Zwischenspeicherung durch mindestens ein Verfahren, welches zur Vorverarbeitung digitalisierter gesprochener Sprache geeignet ist, beschrieben werden.

25. Die Vorrichtung nach einem oder mehreren der vorhergehenden Vorrichtungsansprüche, wobei die Mittel so eingerichtet sind, dass die Ergebnisse der Auswertung der Entscheidungslogik den weiteren Dialogverlauf mit dem Nutzer beeinflussen.

26. Die Vorrichtung nach einem oder mehreren der vorhergehenden Vorrichtungsansprüche, wobei die Mittel so eingerichtet sind, dass eine Entscheidungslogik und/oder Teile davon in Form von administrativ und/oder programmtechnisch veränderbaren deterministischen Regeln abgelegt sind.

27. Die Vorrichtung nach einem oder mehreren der vorhergehenden Vorrichtungsansprüche, wobei die Mittel so eingerichtet sind, dass die Entscheidungslogik und/oder Teile davon über die Sammlung und Auswertung statistisch relevanter Sprachdaten erstellt wurde, insbesondere durch Echokompensationsmittel, Geräuschreduktionsreduktionsmittel, Codiermittel.

28. Die Vorrichtung nach einem oder mehreren der vorhergehenden Vorrichtungsansprüche, wobei die Mittel so eingerichtet sind, dass umfassend folgende Schritte durchführbar sind:
- Liegt ein gültiges Spracherkennungsergebnis vor, so wird dieses für zukünftige Dialoge beibehalten, da in diesem Fall anzunehmen ist, dass sich der Anrufer in der voreingestellten Sprache (default) geäußert hat;
- Die Sprache wird nur dann automatisch und ohne Nachfragen geändert, wenn ein erster Erkennungsversuch eines Spracherkennungsverfahrens in einer ersten Sprache fehl schlug, das Sprachklassifizierungsverfahren eine neue Sprache erkannt hat, und wenn ein zweiter Erkennungsversuch eines Spracherkennungsverfahrens in der neuen vom Sprachklassifizierungsverfahren erkannten Sprache erfolgreich ist,
- Kann keine der oben genannten Regeln angewendet werden, dann ist in einem nächsten Schritt eine multilinguale Eskalation zu nutzen.

29. Die Vorrichtung nach dem vorhergehenden Vorrichtungsanspruch, wobei die Mittel so eingerichtet sind, dass falls eine deutliche Tendenz zu einer Sprache erkennbar ist, durch Erkennung einer Sprache mit einer gewissen Wahrscheinlichkeit und einer entsprechenden Klassifizierung, dann wird der Anrufer gefragt, ob ein Sprachwechsel erwünscht ist.

30. Die Vorrichtung nach einem oder mehreren der vorhergehenden zwei Vorrichtungsansprüche, wobei die Mittel so eingerichtet sind, dass die Ergebnisse der Erkennung wie folgt sind:
- ein match (es wurde eine gültige Eingabe erkannt), diese kann auch durch Wahrscheinlichkeits- und/oder Konfidenzwerte bestimmt sein;
- ein nomatch (es wurde keine gültige Eingabe erkannt), diese kann auch durch Wahrscheinlichkeits- und/oder Konfidenzwerte bestimmt sein; oder
- ein noinput (es wurde nichts gesagt); wobei in Abhängigkeit dieser Ergebnisse, die Sprache gewechselt, beibehalten oder Dialoge mit dem Benutzer gestartet werden.

31. Datenträger mit einer Datenstruktur, die es nach dem Laden in den Computer erlaubt, ein Verfahren nach einem oder mehreren der vorhergehenden Verfahrensansprüche durchzuführen.

## Claims

1. Method for classification of at least two languages in an automatic dialogue system (6) which processes digitized speech input, comprising the following steps:
use of at least one speech recognition method (2, 4a) and at least one language classifying method (3) on the digitized speech input, in order to identify the language of the speech input by logical evaluation (7) of the results of the methods,
**characterized in that** said language classifying method and the speech recognition process are performed parallel in time.

2. Method according to the preceding claim, wherein the language classifying method is used after the speech recognition method if the speech recognition method has not been able to recognize the speech input,
in order then to classify the speech input and, if the classification was successful, the speech recognition method and/or at least one parameter of the speech recognition method is changed, so that the speech recognition is carried out with the changed and/or amended speech recognition method.

3. Method according to one or more of the preceding claims, wherein the results of at least one speech recognition method and/or at least one language classifying method related to the speech input comprise at least one result condition.

4. Method according to one or more of the preceding claims, wherein the logical evaluation of the returned results of at least one speech recognition method and, if necessary, of at least one language classifying method related to the speech input comprise at least one character string and/or a digital symbol and/or a symbol string.

5. Method according to one or more of the preceding claims, wherein the speech input is temporarily stored in digitized form.

6. Method according to the preceding claim, wherein additionally digitized speech data determined from the speech input are temporarily stored, wherein the speech data may comprise one or more of the following elements: extracted feature data, audio data.

7. Method according to one or more of the preceding two claims, wherein the temporarily stored data are described by at least one speech recognition method.

8. Method according to the preceding claim, wherein the temporarily stored data are described by at least one language classifying method.

9. Method according to one or more of the preceding 3 claims, wherein the temporarily stored data in the temporary store are described by at least one method which is suitable for pre-processing digitized spoken language, in particular by echo compensation methods, noise reduction methods and encoding methods.

10. Method according to one or more of the preceding claims, wherein the result of the evaluation by the decision-making logic influences the further course of the dialogue with the user.

11. Method according to one or more of the preceding claims, wherein a decision-making logic and/or parts thereof are laid down in the form of administrative and/or programmatic changeable deterministic rules.

12. Method according to one or more of the preceding claims wherein the decision-making logic and/or parts thereof have been created by collecting and evaluating statistically relevant speech data, in particular via neuronal networks and/or hidden markov models and/or fuzzy logic.

13. Method according to one or more of the preceding claims, comprising the following steps:
- if a valid speech recognition result has been obtained, this is retained for future dialogues, since it can be assumed in this case that the caller has expressed himself in the preset (default) language;
- the language is only altered automatically and without queries if a first recognition attempt with a speech recognition method in a first language has failed, the language classifying method has recognized a new language and if a second recognition attempt with a speech recognition method in the new language recognized by the language classifying method is successful,
- if none of the above rules can be applied, then, a multilingual escalation should be used in a next step.

14. Method according to the preceding claim, wherein if a clear likelihood of one language by recognising a language with a certain probability and a corresponding classification, the caller is asked whether he wishes a change of language.

15. Method according to one or more of the preceding two claims, wherein the results of the recognition are as follows:
- a match (a valid input was recognized); this can also be determined through probability and/or confidence values;
- a nomatch (no valid input was recognized); this can also be determined through probability and/or confidence values; or
- a noinput (nothing was said); wherein, depending on these results, the language is changed, retained or dialogues with the user are started.

16. Device for classifying at least two languages in an automatic dialogue system (6) which processes digitized speech, having means and a configuration of the means which permit the use of at least one speech recognition method (2, 4a) and a language classifying method (3) on the digitized speech input in order to recognize the language of the input through logical evaluation (7) of the results of the method, **characterized in that** the means are being adapted in such way that the method of speech classification and speech recognition are performed parallel in time.

17. Device according to the preceding device claim, wherein the means and the associated device are configured such that the language classifying method is used after the speech recognition method if the speech recognition method has not been able to recognize the speech input, in order then to classify the input and, if the classification was successful, the speech recognition method and/or at least one parameter of the speech recognition method is changed so that the speech recognition is carried out with the amended speech recognition method and/or at least one amended parameter of the speech recognition method.

18. Device according to one or more of the preceding device claims, wherein the means are set up such that the results of at least one speech recognition method and/or at least one language classifying method related to the speech input comprise at least one result condition.

19. Device according to one or more of the preceding device claims, wherein the means are set up such that the logical evaluation of the returned results of at least one speech recognition method and, if necessary, of at least one language classifying method related to the speech input comprise at least one character string and/or a digital symbol and/or a symbol string.

20. Device according to one or more of the preceding device claims wherein the means are set up such that the speech input is temporarily stored in digitized form.

21. Device according to the preceding device claim, wherein the means are set up such that additional feature vectors and/or other digitized data which have been determined from the speech input are temporarily stored, wherein the speech data may comprise one or more of the following elements: extracted feature data, audio data.

22. Device according to the preceding device claim, wherein the means are set up such that the temporarily stored data are described by at least one speech recognition method.

23. Device according to the preceding device claim, wherein the means are set up such that the temporarily stored data are described by at least one language classifying method.

24. Device according to one or more of the preceding 3 device claims, wherein the means are set up such that the temporarily stored data in the temporary store are described by at least one method which is suitable for pre-processing digitized spoken language.

25. Device according to one or more of the preceding device claims, wherein the means are set up such that the result of the evaluation by the decision-making logic influences the further course of the dialogue with the user.

26. Device according to one or more of the preceding device claims, wherein the means are set up such that a decision-making logic and/or parts thereof are laid down in the form of deterministic rules which are changeable from an administrative and/or programming standpoint.

27. Device according to one or more of the preceding device claims, wherein the means are set up such that the decision-making logic and/or parts thereof have been created by collecting and evaluating statistically relevant speech data, in particular via echo compensation means, noise reduction means and encoding means.

28. Device according to one or more of the preceding device claims, wherein the means are set up in such way such that the following steps can be carried out:
- if a valid speech recognition result has been obtained, this is retained for future dialogues, since it can be assumed in this case that the caller has expressed himself in the preset (default) language;
- the language is only altered automatically and without queries if a first recognition attempt with a speech recognition method in a first language has failed, the language classifying method has recognized a new language and if a second recognition attempt with a speech recognition method in the new language recognized by the language classifying method is successful,
- if none of the above rules can be applied, then, a multilingual escalation should be used in a next step.

29. Device according to the preceding device claim, wherein the means are set up such that wherein if there is a clear likelihood of one language by recognising a language with a certain probability and a corresponding classification, the caller is asked whether he wishes a change of language.

30. Device according to one or more of the preceding two device claims, wherein the means are set up such that the results of the recognition are as follows:
- a match (a valid input was recognized); this can also be determined through probability and/or confidence values;
- a nomatch (no valid input was recognized); this can also be determined through probability and/or confidence values; or
- a noinput (nothing was said); wherein, depending on these results, the language is changed, retained or dialogues with the user are started.

31. Data carrier with a data structure which, following loading into the computer, permits a method according to one or more of the preceding method claims to be carried out.

## Revendications

1. Procédé de classification d'au moins deux langues au sein d'un système de dialogue automatique (6) procédant au traitement d'une entrée vocale numérisée, comportant les étapes suivantes :
l'utilisation d'au moins une méthode de reconnaissance vocale (2, 4a) et d'au moins une méthode de classification de langues (3) sur l'entrée vocale numérisée, pour l'identification de la langue parlée au moyen d'une évaluation logique (7) des résultats de la méthode, **caractérisé en ce que** ladite méthode de classification de langue et la méthode de reconnaissance vocale sont mises en oeuvre en parallèle.

2. Procédé selon la revendication précédente, dans lequel la méthode de classification de la langue est utilisée à la suite de la méthode de reconnaissance vocale lorsque la méthode de reconnaissance vocale n'a pas été capable de reconnaître l'entrée vocale,
dans le but ensuite de classifier l'entrée vocale et, lorsque la classification s'avère fructueuse, la méthode de reconnaissance vocale et/ou au moins un paramètre de la méthode de reconnaissance vocale est modifié, de manière à mettre en oeuvre la reconnaissance vocale avec la méthode de reconnaissance vocale modifiée ou amendée.

3. Procédé selon une ou plusieurs des revendications précédentes, dans lequel les résultat d'au moins une méthode de reconnaissance vocale et/ou au moins une méthode de classification de la langue qui sont relatifs à l'entrée vocale comportent au moins une condition de résultat.

4. Procédé selon une ou plusieurs des revendications précédentes, dans lequel l'évaluation logique des résultats rendus par au moins une méthode de reconnaissance vocale et, en tant que de besoin, par au moins une méthode de classification de langue relativement à l'entrée vocale comportent au moins une chaîne de caractère et/ou un symbole numérique et/ou une chaîne de symboles.

5. Procédé selon une ou plusieurs des revendications précédentes, dans lequel l'entrée vocale est stockée de manière temporaire sous forme numérique.

6. Procédé selon la revendication précédente, dans lequel sont stockées de manière temporaire des données vocales numérisées additionnelles déterminées à partir de l'entrée vocale, dans lequel les données vocales peuvent comporter un ou plusieurs éléments suivants : des données caractéristiques d'extraction, des données audio.

7. Procédé selon une ou plusieurs des revendications précédentes, dans lequel les données stockées de manière temporaire sont décrites par au moins une méthode de reconnaissance vocale.

8. Procédé selon une ou plusieurs des revendications précédentes, dans lequel les données stockées de manière temporaire sont décrites par au moins une méthode de classification de langue.

9. Procédé selon une ou plusieurs des trois revendications précédentes, dans lequel les données stockées de manière temporaire sont décrites par au moins une méthode qui est adaptée pour un pré-traitement de la langue parlée numérisée, en particulier par des méthodes de compensation d'écho, des méthodes de réduction de bruit et des méthodes d'encodage.

10. Procédé selon une ou plusieurs des revendications précédentes, dans lequel le résultat de l'évaluation par la logique de prise de décision influence le déroulement ultérieur du dialogue avec l'utilisateur.

11. Procédé selon une ou plusieurs des revendications précédentes, dans lequel une logique de prise de décision et/ou partie de cette dernière sont fixées sous la forme de règles déterministes administrative et/ou variables par programmation.

12. Procédé selon une ou plusieurs des revendications précédentes, dans lequel la logique de prise de décision et/ou partie de cette dernière sont créées par la collecte et l'évaluation de données vocales pertinentes sur un plan statistique, en particulier via des réseaux neuronaux et/ou des modèles cachés de Markov et/ou de la logique floue.

13. Procédé selon une ou plusieurs des revendications précédentes, comportant les étapes suivantes :
- dans le cas de l'obtention d'un résultat valide de reconnaissance vocale, la mise en mémoire pour des dialogues ultérieurs, puisqu'il est présumé dans ce cas que l'appelant s'est exprimé dans sa langue par défaut ;
- la langue n'est modifiée automatiquement et sans autre requête dans le cas où a échoué une première tentative de reconnaissance dans une langue au moyen d'une méthode de reconnaissance vocale, et dans le cas ou une nouvelle langue a été identifié par la méthode de classification de la langue, lorsqu'a pu aboutir une seconde tentative de reconnaissance vocale par la méthode de reconnaissance vocale dans une nouvelle langue reconnue par la méthode de classification de langue,
- l'utilisation dans une étape ultérieure d'une escalade multilingue lorsqu'aucune des règles ci-dessus ne peut être appliquée.

14. Procédé selon la revendication précédente, dans lequel on requiert de l'appelant qu'il précise s'il souhaite modifier la langue lorsque existe une claire vraisemblance pour une langue au moyen de la reconnaissance d'une langue avec une certaine probabilité et une classification correspondante.

15. Procédé selon une ou plusieurs des deux revendications précédentes, dans lequel les résultats de la reconnaissance sont comme suit :
- une correspondance (une entrée valide a été reconnue) ; ce qui peut également être déterminée par des valeurs de probabilités et/ou de confiance ;
- aucune correspondance (aucune entrée valide a été reconnue) ; ce qui peut également être déterminé via des valeurs de probabilité et/ou de confiance, ou
- une absence d'entrée (pas de parole) ; dans lequel, en fonction de ces résultats, la langue est modifiée, maintenue ou des dialogues sont engagés avec l'utilisateur.

16. Dispositif de classification d'au moins deux langues au sein d'un système de dialogue automatique (6) procédant au traitement d'une entrée vocale numérisée, ayant des moyens et une configuration de ceux-ci pour l'utilisation d'au moins une méthode de reconnaissance vocale (2, 4a) et d'au moins une méthode de classification de langue (3) sur l'entrée vocale numérisée, pour l'identification de la langue parlée au moyen d'une évaluation logique (7) des résultats de la méthode, **caractérisé en ce que** les moyens sont adaptés de telle manière à ce que la méthode de classification de la langue et la méthode de reconnaissance vocale sont mises en oeuvre en parallèle.

17. Dispositif selon la revendication de dispositif précédente, dans lequel les moyens et le dispositif qui leur est associé sont configurés de telle manière que la méthode de classification de la langue est utilisée à la suite de la méthode de reconnaissance vocale lorsque la méthode de reconnaissance vocale n'a pas été capable de reconnaître l'entrée vocale,
dans le but ensuite de classifier l'entrée vocale et, lorsque la classification s'avère fructueuse, la méthode de reconnaissance vocale et/ou au moins un paramètre de la méthode de reconnaissance vocale est modifié, de manière à mettre en oeuvre la reconnaissance vocale avec la méthode de reconnaissance vocale modifiée et/ou au moins un paramètre modifié de la méthode de reconnaissance vocale.

18. Dispositif selon une ou plusieurs des revendications de dispositif précédentes, dans lequel les moyens sont configurés de telle manière que les résultats d'au moins une méthode de reconnaissance vocale et/ou au moins une méthode de classification de langue qui sont relatifs à l'entrée vocale comportent au moins une condition de résultat.

19. Dispositif selon une ou plusieurs des revendications de dispositif précédentes, dans lequel les moyens sont configurés de telle manière que l'évaluation logique des résultats rendus par au moins une méthode de reconnaissance vocale et, en tant que de besoin, par au moins une méthode de classification de langue relativement à l'entrée vocale comportent au moins une chaîne de caractère et/ou un symbole numérique et/ou une chaîne de symboles.

20. Dispositif selon une ou plusieurs des revendications de dispositif précédentes, dans lequel les moyens sont configurés pour que l'entrée vocale est stockée de manière temporaire sous forme numérique.

21. Dispositif selon la revendication de dispositif précédente, dans lequel les moyens sont configurés de telle manière que sont stockées de manière temporaire des vecteurs caractéristiques additionnels et/ou d'autre données numérisées déterminées à partir de l'entrée vocale, dans lequel les données vocales peuvent comporter un ou plusieurs éléments suivants : des données caractéristiques d'extraction, des données audio.

22. Dispositif selon la revendication de dispositif précédente, dans lequel les moyens sont configurés de telle manière que les données stockées de manière temporaire sont décrites par au moins une méthode de reconnaissance vocale.

23. Dispositif selon la revendication de dispositif précédente, dans lequel les moyens sont configurés de telle manière que les données stockées de manière temporaire sont décrites par au moins une méthode de classification de langue.

24. Dispositif selon l'une ou plusieurs des trois revendications précédentes de dispositif, dans lequel les moyens sont configurés de telle manière que les données stockées de manière temporaire sont décrites par au moins une méthode qui est adaptée pour un pré-traitement de la langue parlée numérisée.

25. Dispositif selon une ou plusieurs des revendications de dispositif précédentes, dans lequel les moyens sont configurés pour que le résultat de l'évaluation par la logique de prise de décision influence le déroulement ultérieur du dialogue avec l'utilisateur.

26. Dispositif selon une ou plusieurs des revendications de dispositif précédentes, dans lequel les moyens sont configurés pour qu'une logique de prise de décision et/ou partie de cette dernière sont fixées sous la forme de règles déterministes qui peuvent être modifiées sur un plan administrative et/ou par programmation.

27. Dispositif selon une ou plusieurs des revendications de dispositif précédentes, dans lequel les moyens sont configurés de façon à ce que la logique de prise de décision et/ou partie de cette dernière sont créées par la collecte et l'évaluation statistiques de données vocales pertinentes, en particulier par des moyens de compensation d'écho, des moyens de réduction de bruit et des moyens d'encodage.

28. Dispositif selon une ou plusieurs des revendications de dispositif précédentes, dans lequel les moyens sont configurés de manière à réaliser les étapes suivantes :
- dans le cas de l'obtention d'un résultat valide de reconnaissance vocale, la mise en mémoire pour des dialogues ultérieurs, puisqu'il est présumé dans ce cas que l'appelant s'est exprimé dans sa langue par défaut ;
- la langue n'est modifiée automatiquement et sans autre requête dans le cas où a échoué une première tentative de reconnaissance dans une langue au moyen d'une méthode de reconnaissance vocale, et dans le cas ou une nouvelle langue a été identifiée par la méthode de classification de la langue, lorsqu'a pu aboutir une seconde tentative de reconnaissance vocale par la méthode de reconnaissance vocale dans une nouvelle langue reconnue par la méthode de classification de langue,
- l'utilisation dans une étape ultérieure d'une escalade multilingue lorsqu'aucune des règles ci-dessus ne peut être appliquée.

29. Dispositif selon la revendication de dispositif précédente, dans lequel les moyens sont configurés pour que lorsque existe une claire vraisemblance pour une langue au moyen de la reconnaissance d'une langue avec une certaine probabilité et une classification correspondante, l'on requiert de l'appelant qu'il précise s'il souhaite un changement de langue.

30. Dispositif selon une ou plusieurs des deux revendications de dispositif précédentes, dans lequel les moyens sont configurés de telle manière que les résultats de la reconnaissance sont comme suit :
- une correspondance (une entrée valide a été reconnue) ; ce qui peut également être déterminée par des valeurs de probabilités et/ou de confiance ;
- aucune correspondance (aucune entrée valide a été reconnue) ; ce qui peut également être déterminé via des valeurs de probabilité et/ou de confiance, ou
- une absence d'entrée (pas de parole) ; dans lequel, en fonction de ces résultats, la langue est modifiée, maintenue ou des dialogues sont engagés avec l'utilisateur.

31. Un support de données ayant une structure de données qui, à la suite d'un chargement dans un ordinateur, permet l'exécution d'un procédé tel que défini dans une ou plusieurs des revendications de procédé précédentes.
